# EUROPÄISCHE PATENTSCHRIFT

(11) **EP 1 108 576 B1**
(45) Veröffentlichungstag und Bekanntmachung des Hinweises auf die Patenterteilung: **28.11.2007**
(21) Anmeldenummer: 00126407.6
(22) Anmeldetag: 05.12.2000
(51) Int. Cl.: B60H 1/32

(54) **Klimaanalge für ein Fahrzeug**
Air conditioner for a vehicle
Climatisation pour véhicule

(30) Priorität: 17.12.1999 DE 19961162
(43) Veröffentlichungstag der Anmeldung: 20.06.2001
(73) Patentinhaber: Volkswagen Aktiengesellschaft, 38436 Wolfsburg (DE)
(72) Erfinder: Wenkebach, Hans-Uwe, 38442 Wolfsburg (DE); Kutsche, Christian, 38114 Braunschweig (DE)

(56) Entgegenhaltungen:
- DE-A- 3 820 811
- DE-A- 3 829 096
- DE-A- 4 341 756

## Beschreibung

Die vorliegende Erfindung betrifft eine Klimaanlage gemäß dem Oberbegriff des Anspruchs 1, und ein Verfahren für den Betrieb einer Klimaanlage.

Eine Klimaanlage für ein Fahrzeug der eingangs genannten Art ist beispielsweise aus der DE 38 29 096 A1 bekannt. Bei der darin beschriebenen Klimaanlage ist ein Kältemittelkreislauf vorgesehen, der einen Kompressor, einen Kondensator und einen Verdampfer aufweist. Die klimaanlage umfasst keinen zusätzlichen Kältemittelsammler und/oder -Trockner.

Eine weitere Klimaanlage für ein Fahrzeug ist beispielsweise aus der DE 38 20 811 C2 bekannt. Bei einer solchen Klimaanlage ist ein Kompressor vorhanden, der das Kältemittel verdichtet, das dann durch einen Kondensator gekühlt und verflüssigt wird. Das verflüssigte Kältemittel wird einem Hauptverdampfer zugeführt und dort zur Erzielung einer Kühlwirkung expandiert und verdampft. Zusätzlich ist ein einen Heizkreislauf bildenden Wärmetauscher mit einem Hilfsverdampfer und einem Hilfsentspannungsventil in Reihe geschaltet, um die erwärmte Luft im Heizbetrieb zu trocknen.

Die Trocknung des Kältemittels ist bei derartigen Klimaanlagen für Fahrzeuge ein wichtiges Anliegen, denn in dem Kältemittel enthaltene Feuchtigkeit kann im Betrieb der Klimaanlage große Schwierigkeiten bereiten. Das Wasser im Kältemittel kann bei den im Verdampfer herrschenden tiefen Temperaturen ausfrieren. Dies kann zum Beispiel dazu führen, daß relativ kleine Öffnungen in den Ventilen der Anlage verstopft werden. Die Löslichkeit von Wasser in den verschiedenen Kältemitteln ist naturgemäß stark temperaturabhängig, so daß auch relativ geringe Feuchtigkeitsmengen, die bei erhöhten Temperaturen zunächst im Kältemittel gelöst sind, bei den tieferen Temperaturen ausfrieren können.

Ein weiteres Problem besteht bei den herkömmlichen Klimaanlagen für Fahrzeuge darin, daß einige Kältemittel korrodierend wirken, wenn sie Feuchtigkeit enthalten. Dabei können insbesondere metallische Teile der Klimaanlage oder beispielsweise Dichtungsringe angegriffen werden.

Aufgrund dieser Problematik schlägt die DE 43 41 756 A1 vor,daß bei einer Klimaanlage für ein Fahrzeug zwei Kondensatoren verwendet werden, wobei Ventilmittel vorgesehen sind, die in Abhängigkeit vorgegebener Parameter den Kältemittelstrom einem der beiden Kondensatoren zuführen. Bei einer solchen Klimaanlage ist ein Kältemittelsammler- und Trockner erforderlich. Klimaanlagen mit einem solchen Sammler/- Trockner finden in Fahrzeugen in der Praxis häufiger Verwendung. Diese führen zu einer komplexeren Bauweise der Klimaanlage. Diese Bauart der Klimaanlage hat außerdem den Nachteil, daß mehr Kältemittel benötigt wird. Die Klimaanlage hat außerdem insgesamt ein relativ hohes Gewicht, was insbesondere im Hinblick auf das wichtige Anliegen der Senkung des Kraftstoffverbrauchs bei einem Fahrzeug nachteilig ist.

Die Aufgabe der vorliegenden Erfindung besteht somit darin, eine Klimaanlage für ein Fahrzeug der eingangs genannten Gattung zur Verfügung zu stellen, die ein reduziertes Gewicht aufweist und mit weniger Kältemittel auskommt. Weiterhin soll ein Verfahren für den Betrieb einer Klimaanlage angegeben werden.

Diese Aufgabe wird durch eine Klimaanlage der eingangs genannten Art mit den kennzeichnenden Merkmalen des Anspruchs 1 gelöst. Weiterhin gibt Anspruch 5 ein Verfahren für den Betrieb einer Klimaanlage an. Die Unteransprüche betreffen bevorzugte Ausgestaltungen der Erfindung.

Bei Untersuchungen im Rahmen der Entwicklung, die zur vorliegenden Erfindung geführt hat, konnte überraschend festgestellt werden, daß der Betrieb einer Klimaanlage für ein Fahrzeug auch ohne den zuvor beschriebenen Kältemittelsammler und/oder -Trockner möglich ist und dabei zufriedenstellende Ergebnisse erzielt werden. Es ist dabei vorgesehen, vorzugsweise Kältemittel mit hygroskopischem Kältemaschinenöl in einem Kreislauf mit nur einem Verdampfer und einem Kondensator umlaufen zu lassen. Wenn man dabei gemäß einer Weiterbildung des erfindungsgemäßen Verfahrens Kältemaschinenöl mit einem sehr niedrigen Feuchtigkeitsgehalt im Kältemittelkreislauf verwendet, kann man nicht nur auf den Kältemittelsammler verzichten sondern auch auf jegliche Einrichtung zur Trocknung des Kältemittels im Kältemittelkreislauf.

Bei einer anderen bevorzugten Variante des erfindungsgemäßen Verfahrens entfällt lediglich der Kältemittelsammler, aber es ist noch ein Trockner vorhanden, der dabei aber zur Erzielung der angestrebten maximalen Gewichtsreduzierung so klein wie möglich gehalten werden sollte. Vorzugsweise wird dabei ein Trockner verwendet, der reines Trockenmittel enthält. Beispielsweise kann ein Trockner mit einer vorzugsweisen relativ klein dimensionierten Trocknerpatrone verwendet werden.

Eine weitere Gewichtsersparnis kann man dadurch erzielen, daß man die Kättemittelmenge im Kältemittelkreislauf reduziert. Vorzugsweise verwendet man eine Kältemittelmenge von weniger als 800 Gramm. Weiter vorzugsweise reduziert man die Kältemittelmenge auf zwischen etwa 600 Gramm und etwa 800 Gramm. Es hat sich gezeigt, daß bei Verwendung einer solchen reduzierten Kältemittelmenge in einem einfachen Kältemittelkreislauf mit nur einem Verdampfer und nur einem Kondensator eine für den angestrebten Zweck ausreichende Leistung der Klimaanlage gewährleistet ist. Da gemäß der Erfindung in jedem Fall der Kältemittelsammler sich erübrigt und somit ein Bauteil eingespart werden kann, führt dies zu einer erheblichen Gewichtsersparnis und auch zu Kostenvorteilen. Im übrigen kann eine Klimaanlage gemäß der vorliegenden Erfindung prinzipiell ebenso aufgebaut sein wie eine aus dem Stand der Technik bekannte konventionelle Anlage. Eine Klimaanlage für ein Fahrzeug gemäß der Erfindung kann beispielsweise einen Kompressor mit variablem Hubraum umfassen. Eine Änderung der Kompressor-Regelung, die im allgemeinen eine große Leistung bei großem Hubvolumen erzielt und umgekehrt ist bei der erfindungsgemäßen Klimaanlage in der Regel nicht notwendig. Die vorliegende Erfindung führt somit zu einer Vereinfachung im Aufbau der Klimaanlage insgesamt ohne daß dabei eine aufwendigere Kompressorregelung notwendig ist.

Die vorliegende Erfindung betrifft weiterhin ein Verfahren für den Betrieb einer Klimaanlage eines Fahrzeugs, bei dem man ein Kältemittel innerhalb eines Kältemittelkreislaufs umlaufen läßt und bei dem man erfindungsgemäß Kältemittel, vorzugsweise mit hygroskopischem Kältemaschinenöl z. B. Polyalkylenglykol mit einem möglichst sehr niedrigen Feuchtigkeitsgehalt verwendet und bei dem weiterhin innerhalb des Kältemittelkreislaufes keine Sammlerfunktion für das Kältemittel vorgesehen ist. Vorzugsweise ist bei dem Verfahren nach der Erfindung auch keine Trocknung des Kältemittels vorgesehen. Bevorzugte Weiterbildungen des erfindungsgemäßen Verfahrens ergeben sich durch Verwendung einer Klimaanlage mit den Merkmalen eines der Unteransprüche 2 bis 4 beziehungsweise mit den zuvor beschriebenen Merkmalen.

## Patentansprüche

1. Klimaanlage für ein Fahrzeug umfassend ein in einem Kältemittelkreislauf mit einem Verdampfer und einem Kondensator umlaufendes Kältemittel, wobei die Klimaanlage keinen Kältemittelsammler und/oder -Trockner aufweist, **dadurch gekennzeichnet, daß** diese im Kältemittelkreislauf Kältemittel mit einem sehr niedrigen Feuchtigkeitsgehalt enthält.

2. Klimaanlage für ein Fahrzeug nach Anspruch 1, **dadurch gekennzeichnet, daß** diese Kältemittel sowie hygroskopisches Kältemaschinenöl enthält.

3. Klimaanlage für ein Fahrzeug nach einem der Ansprüche 1 oder 2, **dadurch gekennzeichnet, daß** diese im Kältemittelkreislauf eine reduzierte Kältemittelmenge von vorzugsweise weniger als etwa 800g, weiter vorzugsweise von zwischen etwa 600g und etwa 800g enthält.

4. Klimaanlage für ein Fahrzeug nach einem der Ansprüche 1 bis 3, **dadurch gekennzeichnet, daß** diese wenigstens eine im Kältemittelkreislauf angeordnete vorzugsweise relativ klein dimensionierte Trocknerpatrone aufweist, die reines Trockenmittel enthält.

5. Verfahren für den Betrieb einer Klimaanlage eines Fahrzeugs, bei dem man ein Kältemittel innerhalb eines Kältemittelkreislaufs umlaufen läßt, **dadurch gekennzeichnet, daß** man Kältemittel, vorzugsweise mit hygroskopischem Kältemaschinenöl, mit einem sehr niedrigen Feuchtigkeitsgehalt verwendet und innerhalb des Kältemittelkreislaufs keine Sammlerfunktion und/oder keine Trocknung des Kältemittels vorgesehen ist.

6. Verfahren für den Betrieb einer Klimaanlage eines Fahrzeugs nach Anspruch 5, **gekennzeichnet durch** die Verwendung einer Klimaanlage mit den Merkmalen eines der Ansprüche 2 bis 4.

## Claims

1. Air conditioning system for a vehicle comprising a refrigerant which circulates in a refrigerant circuit having an evaporator and a condenser, with the air conditioning system having no refrigerant accumulator and/or dryer, **characterized in that** said air conditioning system contains, in the refrigerant circuit, refrigerant with a very low moisture content.

2. Air conditioning system for a vehicle according to Claim 1, **characterized in that** said air conditioning system contains refrigerant and also hygroscopic refrigerator oil.

3. Air conditioning system for a vehicle according to one of Claims 1 or 2, **characterized in that** said air conditioning system contains, in the refrigerant circuit, a reduced refrigerant quantity of preferably less than approximately 800 g, more preferably of between approximately 600 g and approximately 800 g.

4. Air conditioning system for a vehicle according to one of Claims 1 to 3, **characterized in that** said air conditioning system has at least one dryer cartridge, which is preferably of relatively small dimensions, arranged in the refrigerant circuit, which dryer cartridge contains pure drying agent.

5. Method for operating an air conditioning system of a vehicle, in which method a refrigerant is circulated within a refrigerant circuit, **characterized in that** use is made of refrigerant, preferably with hygroscopic refrigerator oil, having a very low moisture content, and no accumulator function and/or no drying of the refrigerant is provided within the refrigerant circuit.

6. Method for operating an air conditioning system of a vehicle according to Claim 5, **characterized by** the use of an air conditioning system having the features of one of Claims 2 to 4.

## Revendications

1. Climatisation pour véhicule, comprenant un réfrigérant circulant dans un circuit de réfrigérant pourvu d'un évaporateur et d'un condenseur, la climatisation ne présentant pas de collecteur et/ou de sécheur de réfrigérant, **caractérisée en ce qu'**elle contient dans le circuit de réfrigérant du réfrigérant ayant un très faible taux d'humidité.

2. Climatisation pour véhicule selon la revendication 1, **caractérisée en ce qu'**elle contient du réfrigérant ainsi que de l'huile hygroscopique pour machines frigorifiques.

3. Climatisation pour véhicule selon la revendication 1 ou 2, **caractérisée en ce qu'**elle contient dans le circuit de réfrigérant une quantité réduite de réfrigérant, de préférence de moins d'environ 800 g, et d'une manière encore plus préférée comprise entre environ 600 g et environ 800 g.

4. Climatisation pour véhicule selon l'une quelconque des revendications 1 à 3, **caractérisée en ce qu'**elle présente au moins une cartouche d'assèchement disposée dans le circuit de réfrigérant, laquelle est de préférence de relativement petites dimensions et contient uniquement du dessiccateur.

5. Procédé d'exploitation d'une climatisation de véhicule, selon lequel on fait circuler un réfrigérant à l'intérieur d'un circuit de réfrigérant, **caractérisé en ce qu'**on utilise du réfrigérant ayant un très faible taux d'humidité, de préférence avec de l'huile hygroscopique pour machines frigorifiques, et il n'est pas prévu à l'intérieur du circuit de réfrigérant de fonction collectrice et/ou de séchage du réfrigérant.

6. Procédé d'exploitation d'une climatisation de véhicule selon la revendication 5, **caractérisé par** l'utilisation d'une climatisation ayant les caractéristiques de l'une quelconque des revendications 2 à 4.
